# EUROPEAN PATENT SPECIFICATION

(11) **EP 2 277 217 B1**
(45) Date of publication and mention of the grant of the patent: **01.03.2017**
(21) Application number: 08874056.8
(22) Date of filing: 22.04.2008
(51) Int. Cl.: H01M 4/86, H01M 4/88, H01M 4/92, H01M 8/1018, H01M 8/0234, H01M 8/0239, H01M 8/1004, H01M 8/0243

(54) **POLYMER COATING OF PEM FUEL CELL CATALYST LAYERS**
POLYMERBESCHICHTUNG VON PEM-BRENNSTOFFZELLEN-KATALYSATORYSATORSCHICHTEN
REVÊTEMENT POLYMÈRE DE COUCHES DE CATALYSEUR DE PILE À COMBUSTIBLE À MEMBRANE D'ÉCHANGE PROTONIQUE

(43) Date of publication of application: 26.01.2011
(73) Proprietor: Audi AG, 85045 Ingolstadt (DE)
(72) Inventor: CIPOLLINI, Ned, E., Enfield CT 06082 (US)
(86) International application number: PCT/US2008/005161
(87) International publication number: WO 2009/131554

(56) References cited:
- WO-A1-2007/088396
- US-A- 6 010 798
- US-A- 6 020 083
- US-A1- 2002 071 978
- US-A1- 2003 157 397
- US-A1- 2006 099 486
- US-A1- 2007 298 290
- DATABASE WPI Week 200320 Thomson Scientific, London, GB; AN 2003-203900 XP002698745, -& JP 2002 260686 A (ASAHI GLASS CO LTD) 13 September 2002 (2002-09-13)

## Description

### Technical Field

A suspension of a soluble polymer, such as amorphous fluoropolymer, in solvent with fine carbon particles and/or fibers is applied directly onto the surfaces of the outward face and the first few layers of carbon/catalyst particles of a catalyst layer of a proton exchange membrane (PEM) fuel cell.

### Background Art

A traditional PEM fuel cell employs a current collector/gas diffusion layer to mechanically support the fragile membrane-electrode assembly (MEA) and to lower internal resistance of the PEM fuel cell. The current collector/gas diffusion layer is often composed of a macroporous layer also referred to variously as a support layer, a gas diffusion backing, or a gas diffusion layer, typically consisting of a substrate, such as fibrous carbon paper, typically one of the TORAY® papers. This macroporous layer is usually coated on one side with a microporous layer which is hydrophobic or partially hydrophobic, referred to sometimes as a bi-layer. The microporous layer is pressed against the MEA and held in place mechanically by the compressive force of stack loading pressure. The hydrophobicity is required in order to ensure (at the cathode) that product water moves away from the cathode surface, and (at both electrodes) that the internal pores of the microporous layer remain empty of water so that the reactant gases can pass through the support to reach the catalyst layer for electrochemical activity.

Because the spacing between fibers in the macroporous layer (defining the pores) is between about 20 and 40 microns, and because the microporous layer (bi-layer) has a pore size between 0.1 and ten microns, the microporous layers must be on the order of 25 microns thick for structural integrity. Alternatively, the microporous layer may penetrate to a similar depth into the macroporous layer for mechanical support. Attempts to minimize the thickness of the microporous layer (to minimize gas diffusion losses) are limited because they would compromise mechanical strength. If the microporous layer is of insufficient strength, hydraulic pressure from product water will cause the microporous layer to distort and allow water to accumulate between the MEA and microporous layer, preventing reactant gases from reaching the catalyst layer. Additionally, considering several hundred fuel cells in a stack, a thick microporous layer can add length and weight to the fuel cell, both of which should be minimized, particularly in vehicular applications.

The microporous layers are normally fabricated as a sintered mixture of PFE dispersion and fine carbon particles. If the mixture is not uniform or sintering is insufficient, bare carbon surface may be left exposed to wetting and thereby block access of reactant gas to the catalyst layer. The interface between the microporous layer and the catalyst layer is abrupt, and chemically active, which can oxidize the carbon in the microporous layer; that in turn will cause pooling of the product water at the interface and blockage of reactant gas.

An interesting approach to these and other problems is illustrated in US patent 6,880,238, which refers to the macroporous support layer as a gas diffusion backing layer. In two examples, TEFLON AF® copolymer is mixed with catalyst, NAFION® and a solvent into a paste which is applied to the gas diffusion backing layer, such as one of the known TORAY® papers; the gas diffusion backing is thereafter pressed onto a wet proton exchange membrane. In three additional examples, the gas diffusion backing layer is immersed in a solution of amorphous fluoropolymer so as to render the entire gas diffusion backing layer hydrophobic. As a variant, the amorphous fluoropolymer may be sprayed on the TORAY® paper.

The foregoing solves a problem of having to sinter the substrate and microporous layer at temperatures in excess of those which can be tolerated by the PEM. However, other problematic characteristics of such an arrangement, described hereinbefore, are not improved.

In all of the prior art described hereinbefore, the hydrophobic microporous layer is held in contact with the catalyst only as the result of the compressive force applied to the fuel cell stack by its tie rods. The physical contact with the hydrophobic microporous layer does not cause the surface porosity and internal porosity of the catalyst to be hydrophobic. If the hydraulic pressure of liquid water over the cathode exceeds the loading force that presses the microporous layer against the catalyst, liquid water will pool on the catalyst layer surface and impede fluid transport. Summary

The present arrangement utilizes a soluble, hydrophobic polymer to coat the surfaces of the outward face of the catalyst layer as well as the surfaces of the outermost carbon/catalyst particles of the structure, thereby forming a microporous layer on the catalyst layer. The polymer suspension penetrates the electrode porosity to some extent and coats the pore walls with polymer whereby pores of ionomer on carbon which are normally hydrophilic, are rendered hydrophobic. The present invention refers to a fuel cell (5) comprising a proton exchange membrane (7), catalyst layers (8, 9) having catalyst-supporting particles (25), said catalyst layers including a cathode catalyst layer on one surface of the membrane and an anode catalyst layer on a surface of the membrane opposite said one surface, a support layer (14, 15) adjacent each catalyst layer, and a coating (19, 20) of a mixture of a fluoropolymer (29) and fine carbon particles (26) and/or fine carbon fibers coating the surfaces of an outward face (27) of at least one of said catalyst layers and the surfaces of the outermost catalyst supporting particles of said at least one of said catalyst layers; characterized by: said coating (19, 20) being no more than 2 micrometers thick. Further embodiments can be found in dependent claims 2 to 5. The present invention refers also to a method for forming a coating (19, 20) on a catalyst layer (8, 9) of a proton exchange membrane fuel cell (5), comprising:forming a suspension of a mixture of a fluoropolymer (29), fine carbon particles (26) and/or fine carbon fibers and a solvent that evaporates below 200 °C;applying said suspension to at least one catalyst layer (8, 9) of said proton exchange membrane fuel cell (5), said at least one catalyst layer (8, 9) having catalyst-supporting particles (25); and allowing said suspension to dry,whereby a coating is formed that coats the surfaces of an outward face (27) of at least one of said catalyst layers (8, 9) and the surfaces of the outermost catalyst-supporting particles (25) of said at least one of said catalyst layers (8, 9), characterized in that said coating (19, 20) is formed in a thickness of no more than 2 micrometers. Further embodiments can be found in dependent claims 7 to 9.

One exemplary coating is an amorphous perfluorinated copolymer of tetrafluoroethylene with 2,2-bistrifluoromethyl-4,5-difluoro-1,3-dioxole, available under the trade name TEFLON AF®, together with small carbon particles (added to enhance conductivity of the coating), such as those available under the trade name VULCAN®, in a volatile solvent, such as FC 40, FC 75, FC 3283 or PF 5080. The TEFLON AF® coats the NAFION® surrounding the carbon/catalyst particles. Because there is a good penetration of TEFLON AF® into the catalyst layer, and because of the similarities in the chemical structures of NAFION® and TEFLON AF®, there is a good bond, which is either or both a chemical bond or mechanical interference, between the hydrophobic coating and the NAFION® surrounding the carbon/catalyst particles in the catalyst layer. This bond reduces the ability of water to pool between the catalyst layer and the microporous layer formed by the coating of this arrangement. In some circumstances, the coating may form a similar bond between a catalyst layer and a support layer. Other polymers, soluble in acetone, include those available under the trade names KYNAR®, KYNAR-FLEX® and ARCHEMA®. Certain soluble terpolymers may also be suitable.

Despite it being counterintuitive to add resistive layers in order to reduce resistance, the present microporous layer lowers the resistive voltage drop across the fuel cells by between about 15% and about 30%, due to better electrical contact. Although this is not fully understood, it is believed that the carbon fibers in the macroporous layer deform the microporous layer and increase the interfacial contact area. Alternatively, the fine carbon particles (VULCAN®) may distort to better contact the fibers of the macroporous layer.

The amorphous polymer is non-crystalline and provides higher gas permeability than traditional supports. The present arrangement improves fuel cell performance, particularly at high current densities, due to improved mass transport of the reaction gases because of the noncrystalline polymer, the lower polymer content, reduced flooding, and the lower IR drop. In addition, the microporous layer is less than two micrometers thick, compared with 20 micrometers or more in the prior art.

While partially crystalline KYNAR®'s also work in this regard, the amorphous TEFLON AF® may be more effective because it is able to distort to improve interfacial contact.

Other variations will become more apparent in the light of the following detailed description of exemplary embodiments, as illustrated in the accompanying drawings.

### Brief Description of the Drawings

Fig. 1 is a side elevation view, not to scale, of a fuel cell in which the present arrangement may be utilized.
Fig. 2 is a fragmentary, stylized, simplified elevation view, not to scale, of the cathode catalyst layer of a fuel cell treated in accordance with the present arrangement.
Fig. 3 is a plot of voltage vs. current density for fuel cells with and without the present arrangement, illustrating improved fuel cell performance.

### Mode(s) of Implementation

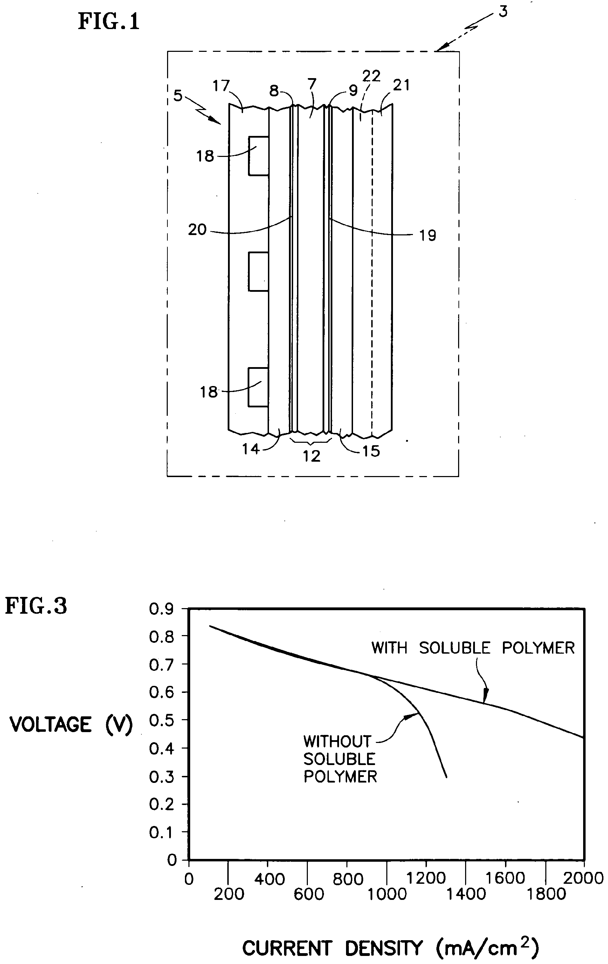

Referring to Fig. 1, a fuel cell power plant 3 comprises a stack of fuel cells 5 along with balance of plant equipment (not shown) such as reactant supply pumps, valves and controls, coolant pumps, valves and controls, as well as electrical output controls and regulators for processing power output, etc. The fuel cell 5, which may utilize the present arrangement, includes a proton exchange membrane 7, which typically is a perfluorinated polymer such as the well-known NAFION®, with catalyst layers on either side, the anode catalyst layer 8 on one side and the cathode catalyst layer 9 on the other side. Both of the catalyst layers are typically comprised of a mixture of carbon particles, partially coated with a catalyst, such as platinum, and an ionically conductive binder, such as NAFION®. The membrane 7 and catalyst layers 8, 9 comprise a membrane electrode assembly 12. On either side of the membrane electrode assembly 12 there is a support 14 (previously called current collector/gas diffusion layer and macroporous layer) 15, which, in some of the prior art described hereinbefore, may have included a microporous layer adjacent the catalyst layers 8, 9. In this case, there is no depiction of a microporous layer because, with the present arrangement, such a layer is so thin (on the order of micrometers) as to be swamped by a line width in the drawing, and thus not visible.

Adjacent the support 14 on the anode side, a fuel reactant gas flow field plate 17 includes passageways 18 for fuel. Similarly, the cathode side has an oxidant reactant gas flow field plate 21 including passageways 22 for the flow of oxidant reactant gas, typically air. The plates 17, 21 may be solid or may be porous and at least somewhat hydrophilic, depending upon the design of the fuel cell power plant in which the present arrangement may be utilized. The coating 19 of this arrangement is juxtaposed to cathode catalyst layer 9 and support 15; a similar coating 20 may or may not be juxtaposed to anode catalyst layer 8 and support 14, depending on the fuel cell design.

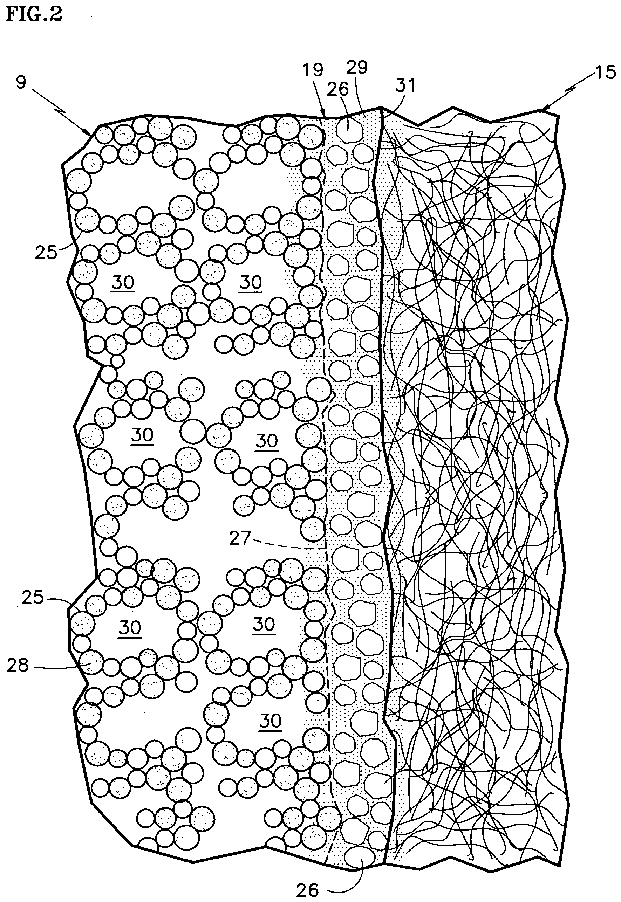

Referring to Fig. 2, the cathode catalyst layer 9 is depicted by a plurality of circles 25 representing carbon particles of between about 20 and 100 nanometers diameter dappled with catalyst 28, typically Platinum (Pt) or Pt- alloy of the order of 2 nm diameter, coated with an ionically and electrically conductive binder, such as NAFION®. The NAFION® binder is not shown in Fig. 2 for clarity. The NAFION® is on a good portion of the surfaces of the carbon particles, adhering adjacent carbon particles together. The NAFION® coats single particles and two-particle aggregates. Typical catalyst layers are of the order of 50 v% porosity, 25 v% carbon/catalyst and 25 v% NAFION® ionomer. Typical thickness for cathode catalyst layer 9 is about 10 micrometers. The circles 25 covered completely or in part with stippling depict the carbon/catalyst particles which, when mixed with NAFION®, form the catalyst layer which is coated with the carbon/fluoropolymer mixture. The particles 26 (without stippling) do not contain catalyst and comprise the carbon/fluoropolymer coating of this arrangement.

The carbon/fluoropolymer coating 19 of this arrangement contains carbon particles 26 of diameter between about 20 nm and about 1000 nm and/or carbon fibers with diameters between about 5 nm and about 600 nm and lengths between about 1 micrometer and about 100 micrometers. Only particulates are depicted in Fig. 2. The particles are coated with soluble fluorocarbon polymer film 29, represented by the patterned dots in Fig. 2, which has been deposited on the outward face of the cathode catalyst layer 9 in accordance with the present arrangement. The microporous layer 19 of carbon/fluoropolymer is of finite thickness (such as 1 or 2 micrometers) beyond the outward face of the cathode catalyst layer 9 depicted by the dotted line 27. Additionally, the soluble polymer 29 penetrates and coats the walls of surface pores 30. The carbon particles 26 are generally too large to enter these surface pores. Thus, the microporous layer 19 is adhered to the catalyst layer 9 by mechanical interference and chemical adhesion. This thin layer replaces the "bilayer" or other microporous layers of the prior art.

The coating 19 abuts against the support layer 15, which is depicted as being carbon fiber paper as is typically used in the art, such as one of the TORAY® papers. As depicted, the outermost film of the soluble fluorocarbon coating 29 is deformed by the fibers of the macroporous support layer 15, shown to the right of the heavy line 31, and some of the coating 19 will become intermixed with the carbon fibers of the support layer 15 when the fuel cell is compressed in a stack, improving electrical contact over that obtained without the microporous layer 19.

In the present arrangement, a suitable soluble polymer, such as TEFLON AF® is mixed in a low vapor pressure, low surface energy solvent, such as FC 40, FC 77, FC 3283 or PF 5080, along with some fine carbon particles, such as that sold under the trade name VULCAN® XC72, although acetylene blacks, graphite particles or carbon fibers may be used as alternative carbons. An exemplary mix is about 20 wt% (of solids) soluble polymer and 80 wt% of carbon. This is much less polymer than traditionally used. However, the soluble polymer, in various different utilizations of this arrangement, may vary between about 5 wt% and almost 100 wt%. The choice of a proper solvent ensures that the mixture penetrates well into the catalyst layer structure so that the soluble polymer coats and bonds with the NAFION® surrounding the catalyst particles. Because of this bond, there is no opportunity for liquid to pool at the outer surface of the catalyst layer; this is a principal feature of this arrangement.

Soluble polymers which may be employed in this arrangement include known soluble polymers and soluble copolymers, such as KYNAR® and KYNAR-FLEX®, in a solvent such as acetone or tetrahydrofuran, or TEFLON AF® in FC75 or FC40 or mixtures of similar solvents. TEFLON AF® is a copolymer of (i) tetrafluoro ethylene and (ii) 2,2-bistrifluoromethyl-4,5-difluoro-1,3 dioxole. Other copolymers and terpolymers suitable for this microporous layer soluble in inert solvents may be comprised of other monomers in addition to (i) and (ii) above, such as (iii) hexafluropropylene, (iv) pentafluoroethoxytrifluoroethene, and (v) trifluoromethoxytrifluoroethene. Carbon fillers include the common carbon blacks such as BLACK PEARLS® and VULCAN®, heat treated carbon blacks such as VULCITE®, acetylene blacks such as SHAWINIGAN® black, and carbon fibers such as single wall or multiwall carbon nanotubes.

In one example, 20 grams of a suspension of TEFLON AF® 2400 (1 wt% in FC75) was ultrasonically mixed with 0.8 grams of VULCAN® XC72 pellets and 32 grams of FC 3283 then diluted with 60 more grams of FC 3283. The resultant suspension was sprayed onto a commercial MEA at a loading of about 70 µg/cm² with a common air brush and nitrogen propellant at 10 psig. The thickness of the coating was about 2 microns.

Fig. 3 shows the benefits in performance using hydrogen and air at stoichiometries of 5 and 2.5, respectively. The exemplary cell was also shown to have about a 27% reduction in resistive voltage drop compared to a similar cell without the present arrangement. An additional benefit is an improved ability for startup from freezing conditions.

It is believed that when pressure is applied in the stack between the support layer 15 and the cathode catalyst layer 9, the carbon fibers and the catalyst layer structure "bite through" the soluble polymer of the film and catalyst layer coating, creating greater ionic and electric conductivity between the carbon of the support layer and the catalyst layer.

The suspension may be applied by spraying or rolling the suspension or by dipping the catalyst into the suspension.

The advantages of the present arrangement may be achieved by an alternative method in which a small amount of the suspension of soluble polymer and small carbon particles is applied through an outward face of the support substrate 14, 15 rendering the support substrate less hydrophilic than it had been, the spray reaching the outward surface of the catalyst layer creating the microporous layer and causing a bond between the catalyst layer and the support substrate.

In this case, the MEA 12 (Fig. 1) is sandwiched between a pair of support layers 14, 15 held together by edge seals (not shown) to form a unitized electrode assembly. When the solvent of soluble polymer and fine carbon particles is sprayed through the support layers 14, 15, which are on the order of 100 micrometers thick, the suspension reaches the interface between the support layers 14, 15 and the catalyst layers 8, 9, achieving the same effect as is illustrated in Fig. 2, i.e., providing the microporous layer 19. This may tend to render the entire assembly too hydrophobic; pre-treating or post-treating of the support layers 14, 15 with suitable solutions, such as some of the conventional solutions containing tin, can offset the hydrophobic effects of the spray within the support layers 14, 15, thus assuring good water transport through the support plates.

## Claims

1. A fuel cell (5) comprising a proton exchange membrane (7), catalyst layers (8, 9) having catalyst-supporting particles (25), said catalyst layers including a cathode catalyst layer on one surface of the membrane and an anode catalyst layer on a surface of the membrane opposite said one surface, a support layer (14, 15) adjacent each catalyst layer, and a coating (19, 20) of a mixture of a fluoropolymer (29), that is soluble in a solvent that evaporates below 200 °C, and fine carbon particles (26) and/or fine carbon fibers coating the surfaces of an outward face (27) of at least one of said catalyst layers and the surfaces of the outermost catalyst supporting particles of said at least one of said catalyst layers;
**characterized by**:
said coating (19, 20) being no more than 2 micrometers thick.

2. A fuel cell (5) according to claim 1 **characterized in that** said at least one of said catalyst layers (8, 9) is a cathode catalyst layer (9).

3. A fuel cell (5) according to claim 1 or 2 further **characterized in that** said fluoropolymer (29) in said coating (19, 20) is selected from the list of: (a) amorphous perfluorinated hydrocarbon ethers, (b) copolymers and terpolymers of (i) tetrafluoro ethylene, (ii) hexafluoropropylene, (iii) 2,2-bistrifluoromethyl-4,5-difluoro-1,3-dioxole, (iv) pentafluoro-ethoxytrifluoroethene, and (v) trifluoromethoxytrifluoroethene and (c) copolymers of polyvinylidene fluoride with hexafluoro propylene.

4. A fuel cell (5) according to any of claims 1 to 3 further **characterized in that** said mixture contains between 5 wt% and 99 wt% fluoropolymer (29).

5. A fuel cell power plant (3) **characterized by** a fuel cell (5) according to any of claims 1 to 4.

6. A method for forming a coating (19, 20) on a catalyst layer (8, 9) of a proton exchange membrane fuel cell (5), comprising:
forming a suspension of a mixture of fluoropolymer (29), that is soluble in a solvent that evaporates below 200 °C, fine carbon particles (26) and/or fine carbon fibers and a solvent that evaporates below 200 °C;
applying said suspension to at least one catalyst layer (8, 9) of said proton exchange membrane fuel cell (5), said at least one catalyst layer (8, 9) having catalyst-supporting particles (25); and
allowing said suspension to dry, whereby a coating is formed that coats the surfaces of an outward face (27) of at least one of said catalyst layers (8, 9) and the surfaces of the outermost catalyst-supporting particles (25) of said at least one of said catalyst layers (8, 9),
**characterized in that** said coating (19, 20) is formed in a thickness of no more than 2 micrometers.

7. A method according to claim 6 further **characterized in that** said step of applying comprises applying said suspension to two catalyst layers (8, 9) of said proton exchange membrane fuel cell (5), thus forming a coating (19, 20) coating the surfaces of an outward face (27) of said two catalyst layers (8, 9) and the surfaces of the outermost catalyst-supporting particles (25) of said two catalyst layers (8, 9).

8. A method according to claim 6 or 7 further **characterized in that** said fluoropolymer (29) in said coating (19, 20) is selected from the list of: (a) amorphous perfluorinated hydrocarbon ethers, (b) copolymers and terpolymers of (i) tetrafluoro ethylene, (ii) hexafluoropropylene, (iii) 2,2-bistrifluoromethyl-4,5-difluoro-1,3-dioxole, (iv) pentafluoroethoxytrifluoroethene, and (v) trifluoromethoxytrifluoroethene and (c) copolymers of polyvinylidene fluoride with hexafluoro propylene.

9. A method according to any of claims 6 to 8, further **characterized in that** said mixture contains between 5 wt% and 99 wt% fluoropolymer (29).

## Patentansprüche

1. Brennstoffzelle (5), umfassend eine Protonenaustauschmembran (7), Katalysatorschichten (8, 9) mit katalysatortragenden Partikeln (25), wobei die Katalysatorschichten an einer Fläche der Membran eine Kathodenkatalysatorschicht und an einer der einen Fläche entgegengesetzten Fläche der Membran eine Anodenkatalysatorschicht aufweisen, eine Trägerschicht (14, 15) neben jeder Katalysatorschicht, und einen Überzug (19, 20) aus einem Gemisch aus einem Fluorpolymer (29), das in einem unter 200 °C verdampfenden Lösemittel löslich ist, und feinen Kohlenstoffpartikeln (26) und/oder feinen Kohlenstofffasern, der die Oberflächen einer auswärts gerichteten Fläche (27) zumindest einer der Katalysatorschichten und die Oberflächen der äußersten katalysatortragenden Partikel der zumindest einen der Katalysatorschichten überzieht;
**dadurch gekennzeichnet, dass**
der Überzug (19, 20) nicht mehr als 2 Mikrometer dick ist.

2. Brennstoffzelle (5) nach Anspruch 1, **dadurch gekennzeichnet, dass** die zumindest eine der Katalysatorschichten (8, 9) eine Kathodenkatalysatorschicht (9) ist.

3. Brennstoffzelle (5) nach Anspruch 1 oder 2, ferner **dadurch gekennzeichnet, dass** das Fluorpolymer (29) in dem Überzug (19, 20) aus der Liste aus: (a) amorphen perfluorierten Kohlenwasserstoffethern, (b) Copolymeren und Terpolymeren von (i) Tetrafluorethylen, (ii) Hexafluorpropylen, (iii) 2,2-Bistrifluormethyl-4,5-Difluor-1,3-Dioxol, (iv) Pentafluorethoxitrifluorethen und (v) Trifluormethoxitrifluorethen und (c) Copolymeren von Polyvinylidenfluorid mit Hexafluorpropylen gewählt ist.

4. Brennstoffzelle (5) nach einem der Ansprüche 1 bis 3, ferner **dadurch gekennzeichnet, dass** das Gemisch zwischen 5 Gew.-% und 99 Gew.-% Fluorpolymer (29) enthält.

5. Brennstoffzellenkraftwerk (3), **gekennzeichnet durch** eine Brennstoffzelle (5) nach einem der Ansprüche 1 bis 4.

6. Verfahren zur Bildung eines Überzugs (19, 20) auf einer Katalysatorschicht (8, 9) einer Protonenaustauschmembran-Brennstoffzelle (5), umfassend:
Bilden einer Suspension eines Gemischs aus Fluorpolymer (29), das in einem unter 200 °C verdampfenden Lösemittel löslich ist, feinen Kohlenstoffpartikeln (26) und/oder feinen Kohlenstofffasern und einem Lösemittel, das unter 200 °C verdampft;
Aufbringen der Suspension auf zumindest eine Katalysatorschicht (8, 9) der Protonenaustauschmembran-Brennstoffzelle (5), wobei die zumindest eine Katalysatorschicht (8, 9) katalysatortragende Partikel (25) aufweist; und
Trocknen lassen der Suspension,
wodurch ein Überzug gebildet wird, der die Oberflächen einer auswärts gerichteten Fläche (27) von zumindest einer der Katalysatorschichten (8, 9) und die Oberflächen der äußersten katalysatortragenden Partikel (25) der zumindest einen der Katalysatorschichten (8, 9) überzieht,
**dadurch gekennzeichnet, dass** der Überzug (19, 20) in einer Dicke von nicht mehr als 2 Mikrometern gebildet wird.

7. Verfahren nach Anspruch 6, ferner **dadurch gekennzeichnet, dass** der Schritt des Aufbringens das Aufbringen der Suspension auf zwei Katalysatorschichten (8, 9) der Protonenaustauschmembran-Brennstoffzelle (5), wodurch ein Überzug (19, 20) gebildet wird, der die Oberflächen einer auswärts gerichteten Fläche (27) der beiden Katalysatorschichten (8, 9) und die Oberflächen der äußersten katalysatortragenden Partikel (25) der beiden Katalysatorschichten (8, 9) überzieht, umfasst.

8. Verfahren nach Anspruch 6 oder 7, ferner **dadurch gekennzeichnet, dass** das Fluorpolymer (29) in dem Überzug (19, 20) aus der Liste aus: (a) amorphen perfluorierten Kohlenwasserstoffethern, (b) Copolymeren und Terpolymeren von (i) Tetrafluorethylen, (ii) Hexafluorpropylen, (iii) 2,2-Bistrifluormethyl-4,5-Difluor-1,3-Dioxol, (iv) Pentafluorethoxitrifluorethen und (v) Trifluormethoxitrifluorethen und (c) Copolymeren von Polyvinylidenfluorid mit Hexafluorpropylen gewählt ist.

9. Verfahren nach einem der Ansprüche 6 bis 8, ferner **dadurch gekennzeichnet, dass** das Gemisch zwischen 5 Gew.-%und 99 Gew.-% Fluorpolymer (29) enthält.

## Revendications

1. Pile à combustible (5) comprenant une membrane d'échange de protons (7), des couches de catalyseur (8, 9) ayant des particules de support de catalyseur (25), lesdites couches de catalyseur incluant une couche de catalyseur cathodique sur une surface particulière de la membrane et une couche de catalyseur anodique sur une surface de la membrane opposée à ladite surface particulière, une couche de support (14, 15) adjacente à chaque couche de catalyseur, et un revêtement (19, 20) d'un mélange d'un fluoropolymère (29), qui est soluble dans un solvant qui s'évapore au-dessous de 200 °C, et des fines particules de carbone (26) et/ou des fines fibres de carbone revêtant les surfaces d'une face extérieure (27) d'au moins une desdites couches de catalyseur et les surfaces des particules de support de catalyseur les plus extérieures de ladite au moins une desdites couches de catalyseur;
**caractérisée par** :
ledit revêtement (19, 20) ne faisant pas plus de 2 micromètres d'épaisseur.

2. Pile à combustible (5) selon la revendication 1, **caractérisée en ce que** ladite au moins une desdites couches de catalyseur (8, 9) est une couche de catalyseur cathodique (9).

3. Pile à combustible (5) selon la revendication 1 ou 2, **caractérisée en ce que**, en outre, ledit fluoropolymère (29) dans ledit revêtement (19, 20) est sélectionné à partir de la liste : (a) des éthers d'hydrocarbure perfluorés amorphes, (b) des copolymères et des terpolymères de (i) tétrafluoroéthylène, (ii) hexafluoropropylène, (iii) 2,2-bistrifluorométhyl-4,5-difluoro-1,3-dioxole, (iv) pentafluoroéthoxytrifluoroéthène et (v) trifluorométhoxytrifluoroéthène et (c) des copolymères de polyfluorure de vinylidène avec de l'hexafluoropropylène.

4. Pile à combustible (5) selon l'une quelconque des revendications 1 à 3, **caractérisée en ce que**, en outre, ledit mélange contient entre 5 % en poids et 99 % en poids de fluoropolymère (29).

5. Centrale électrique à pile à combustible (3) **caractérisée par** une pile à combustible (5) selon l'une quelconque des revendications 1 à 4.

6. Procédé pour former un revêtement (19, 20) sur une couche de catalyseur (8, 9) d'une pile à combustible à membrane d'échange de protons (5), comprenant :
la formation d'une suspension d'un mélange de fluoropolymère (29), qui est soluble dans un solvant qui s'évapore au-dessous de 200 °C, des fines particules de carbone (26) et/ou des fines fibres de carbone et un solvant qui s'évapore au-dessous de 200 °C ;
l'application de ladite suspension à au moins une couche de catalyseur (8, 9) de ladite pile à combustible à membrane d'échange de protons (5), ladite au moins une couche de catalyseur (8, 9) ayant des particules de support de catalyseur (25) ; et
l'autorisation de ladite suspension à sécher,
moyennant quoi un revêtement est formé qui revêt les surfaces d'une face extérieure (27) d'au moins une desdites couches de catalyseur (8, 9) et les surfaces des particules de support de catalyseur les plus extérieures (25) de ladite au moins une desdites couches de catalyseur (8, 9),
**caractérisé en ce que** ledit revêtement (19, 20) est formé dans une épaisseur non supérieure à 2 micromètres.

7. Procédé selon la revendication 6, **caractérisé en ce que**, en outre, ladite étape d'application comprend l'application de ladite suspension à deux couches de catalyseur (8, 9) de ladite pile à combustible à membrane d'échange de protons (5), formant ainsi un revêtement (19, 20) revêtant les surfaces d'une face extérieure (27) desdites deux couches de catalyseur (8, 9) et les surfaces des particules de support de catalyseur les plus extérieures (25) desdites deux couches de catalyseur (8, 9).

8. Procédé selon la revendication 6 ou 7, **caractérisé en ce que**, en outre, ledit fluoropolymère (29) dans ledit revêtement (19, 20) est sélectionné à partir de la liste : (a) des éthers d'hydrocarbure perfluorés amorphes, (b) des copolymères et des terpolymères de (i) tétrafluoroéthylène, (ii) hexafluoropropylène, (iii) 2,2-bistrifluorométhyl-4,5-difluoro-1,3-dioxole; (iv) pentafluoroéthoxytrifluoroéthène et (v) trifluorométhoxytrifluoroéthène et (c) des copolymères de polyfluorure de vinylidène avec de l'hexafluoropropylène.

9. Procédé selon l'une quelconque des revendications 6 à 8, **caractérisé en ce que**, en outre, ledit mélange contient entre 5 % en poids et 99 % en poids de fluoropolymère (29).
